# EUROPEAN PATENT APPLICATION

(11) **EP 1 895 248 A2**
(43) Date of publication of application: **05.03.2008**
(21) Application number: 07014712.9
(22) Date of filing: 26.07.2007
(51) Int. Cl.: F25B 27/02, F25B 13/00

(54) **Air-conditioning and electric power generating system and control method for the same**

(30) Priority: 28.08.2006 JP 2006230574
(71) Applicant: Sanyo Electric Co., Ltd., Moriguchi-shi, Osaka-fu (JP)
(72) Inventor: Sakamoto, Naoki, Ora-gun Gunma 370-0603 (JP); Kanai, Hiroshi, Kumagaya-shi Saitama 360-0202 (JP); Mizuno, Yoshihito, Ora-gun Gunma 370-0602 (JP)
(74) Representative: Glawe, Delfs, Moll

(57) **Abstract**

An air-conditioning and electric power generating system (1) including a gas heat pump type air conditioner, an electric power generator (11) that is driven by a gas engine (10) and has electric power generating capacity corresponding to the driving power of the gas engine when a compressor (12) is separated from the gas engine (10) by a clutch (14), a system interconnection type inverter (33) that is connected to the electric power generator (11) and outputs power to a commercial system (35), a waste heat using portion (29) for using waste heat of the gas engine (10), and an engine controller having a first control mode and a second control mode as a driving mode to control the driving of the gas engine. The engine controller (51) controls the gas engine to serve as a gas engine for driving both the compressor and the electric power generator in the first control mode while controlling the gas engine to serve as a gas engine for driving only the electric power generator in the second control mode.

## Description

### BACKGROUND OF THE INVENTION

### 1. Field of the Invention

The present invention relates to an air-conditioning/electric power generating system and a method of controlling the system, and particularly to an air-conditioning/electric power generating system that uses waste heat for hot water supply or the like and drives a compressor and a electric power generator by using a gas engine so that both of air condition and electric power generation can be performed at the same time or only electric power generation can be performed, and a method of controlling the air-conditioning/electric power generating system.

### 2. Description of the Related Art

In a conventional engine driving type air conditioner, a compressor for compressing refrigerant is driven by an engine such as a gas engine or the like to perform air conditioning operation. It has been recently sought to implement a power supply less type air conditioner in which an electric power generator is connected to a gas engine, and power generated by the electric power generator is supplied to load devices such as an air blower for blowing air to an outdoor heat exchanger, a cooling water pump for cooling the engine, etc. during air conditioning operation (for example, see JP-A-5-231745).

The purpose of the conventional air conditioner as described above resides in that electric power is generated with high efficiency under air conditioning operation and the amount of power which is required to be supplied from an external commercial power source is reduced by using the electric power generated by the air conditioner concerned, whereby the amount of power supplied from the external commercial power source is reduced to be less than a predetermined use power amount. Therefore, under the state that the air conditioning operation is not carried out, it is general that the gas engine is stopped and the electric power is not generated.

### SUMMARY OF THE INVENTION

The present invention has been implemented in view of the foregoing situation, and has an object to provide an air-conditioning/electric power generating system in which efficient system interconnection can be performed by carrying out electric power generation irrespective of whether the air conditioning operation is carried out or not, and also which can be controlled so that an NOx exhaust concentration or NOx exhaust-gas amount required in each operation mode is achieved irrespective of the operation mode.

In order to attain the above object, there is provide an air-conditioning and electric power generating system comprising: an air conditioner having a gas engine, an outdoor heat exchanger, a pressure-reducing device, an indoor heat exchanger and a compressor connected to the gas engine through a clutch; an electric power generator that is driven by the gas engine and has electric power generating capacity corresponding to the driving power of the gas engine when the compressor is separated from the gas engine by the clutch; a system interconnection type inverter that is connected to the electric power generator and outputs power to a commercial system; a waste heat using portion for using waste heat of the gas engine; and an engine controller that has a first control mode and a second control mode as a driving mode to control the driving of the gas engine, and controls the gas engine to serve as a gas engine for driving both the compressor and the electric power generator in the first control mode while controlling the gas engine to serve as a gas engine for driving only the electric power generator in the second control mode.

According to the above construction, the engine controller has the first control mode for controlling the gas engine to serve as a gas engine for driving both the compressor and the electric power generator and the second control mode for controlling the gas engine to serve as a gas engine for driving only the electric power generator. Accordingly, the engine control can optimally control the gas engine in any mode.

In this case, the engine controller may control the NOx exhaust concentration or NOx exhaust gas amount in the exhaust gas of the gas engine in accordance with each control mode.

Furthermore, the engine controller may control the gas engine in the first control mode so that an NOx 12 mode value defined in JIS B8627 corresponding to an air-conditioning load is less than the NOx exhaust concentration.

Still furthermore, the engine controller may control the gas engine in the second control mode so that the maximum value of the NOx exhaust concentration is not more than a predetermined NOx maximum exhaust concentration as a gas engine co-generation system.

Furthermore, a method of controlling an air-conditioning and electrical power generating system including; an air conditioner having a gas engine, an outdoor heat exchanger, a pressure-reducing device, an indoor heat exchanger and a compressor connected to the gas engine through a clutch; an electric power generator that is driven by the gas engine and has electric power generating capacity corresponding to the driving power of the gas engine when the compressor is separated from the gas engine by the clutch; a system interconnection type inverter that is connected to the electric power generator and outputs power to a commercial system; and a waste heat using portion for using waste heat of the gas engine, comprises a driving mode identifying step of identifying a present driving mode; and an NOx exhaust concentration control step of controlling the gas engine so that an NOx 12 mode value defined in JIS B8627 corresponding to an air-conditioning load is less than a predetermined NOx exhaust concentration when the present driving mode is a fist control mode for controlling the gas engine to serve as a gas engine for driving both the compressor and the electric power generator, and controlling the gas engine so that the maximum value of the NOx exhaust concentration is not more than a predetermined NOx maximum exhaust concentration as a gas engine co-generation system when the present driving mode is a second control mode for controlling the gas engine to serve as a gas engine for driving only the electric power generator.

According to the present invention, as the driving mode for controlling the driving of the gas engine are provided the first control mode for controlling the gas engine to serve as a gas engine for driving both the compressor and the electric power generator and the second control mode for controlling the gas engine to serve as a gas engine for driving only the electric power generator. Therefore, the NOx exhaust concentration or NOx exhaust amount which is required in any control mode can be controlled.

### BRIEF DESCRIPTION OF THE DRAWINGS

Fig. 1 is a diagram showing a gas engine driving type air-conditioning and electric power generating system;
Fig. 2 is a diagram showing the relationship between the NOx exhaust concentration and the output of an electric power generator;
Fig. 3 is a diagram showing the control of the NOx exhaust concentration; and
Fig. 4 is a flowchart showing operation mode switching control.

### DETAILED DESCRIPTION OF THE PREFERRED EMBODIMENT

A preferred embodiment according to the present invention will be described hereunder with reference to the accompanying drawings.

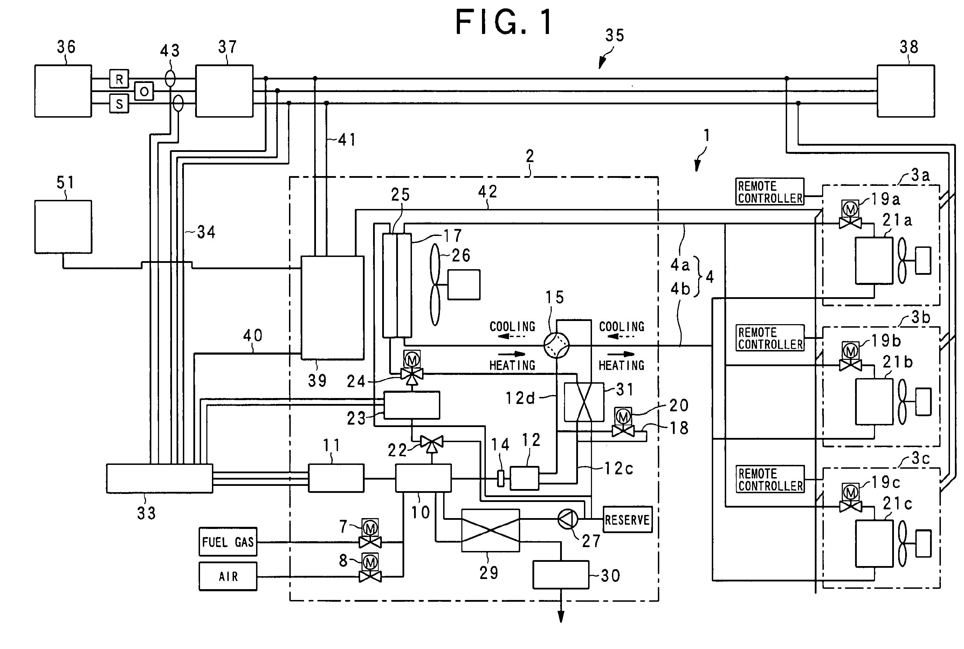

Fig. 1 is a diagram showing a gas engine driving type air-conditioning and electric power generating system.

The air-conditioning and electric power generating system 1 has an outdoor unit 2 and plural indoor units 3a to 3c which are connected to one another through an inter-unit pipe 4 comprising a liquid pipe 4a and a gas pipe 4b. In the outdoor unit 2 are disposed a gas engine 10, an electric power generator 11 which is driven by the gas engine 10 to generate electric power, and a compressor 12 for compressing refrigerant by the driving force of the gas engine 10.

The gas engine 10 generates the driving force by burning air-fuel mixture containing fuel such as gas or the like supplied through a fuel adjusting valve 7 and air supplied through a throttle valve 8.

The electric power generator 11 has the electric generating capacity corresponding to the driving power of the gas engine 10 when the compressor 12 is separated from the gas engine 10 by an electromagnetic clutch 14 described later, and it can supply sufficient power as an electric generating system when the air-conditioning operation is not carried out.

The compressor 12 is connected to the gas engine 10 through the electromagnetic clutch 14. A discharge pipe 12c of the compressor 12 is successively connected to a plate type heat exchanger 31, a four-way valve 15 and an outdoor heat exchanger 17 in this order. Expansion valves 19a to 19c and indoor heat exchangers 21a to 21b of respective indoor units 3 are connected to the outdoor heat exchanger 17 through the liquid pipe 4a, and the four-way valve 15 is connected to the indoor heat exchangers 21a to 21b through the gas pipe 4b. The compressor d12 is connected to the four-way valve 15. The discharge pipe 12c and a suction pipe 12d of the compressor 12 are connected to each other through a bypass pipe 18, and a bypass valve 20 for unload is connected to the bypass pipe 18.

Under the driving operation of the compressor 12, if the switching state of the four-way valve 15 is set to a heating side, refrigerant is successively circulated through the compressor 12, the four-way valve 15, the indoor heat exchangers 21a to 21b, the expansion valves 19a to 19c and the outdoor heat exchanger 17 in this order as indicated by a solid-line arrow, and a room is heated by the condensation heat of the refrigerant in the indoor heat exchangers 21a to 21b.

Furthermore, if the switching state of the four-way valve 15 is set to a cooling side, the refrigerant is successively circulated through the compressor 12a, the four-way valve 15, the outdoor heat exchanger 17, the expansion valves 18a to 19c and the indoor heat exchangers 21a to 21b in this order as indicated by a broken-line arrow, and the room is cooled by the evaporation heat of the refrigerant in the indoor heat exchangers 21a to 21b.

Next, a cooling device for the gas engine 10 will be described.

This gas engine 10 is designed as a water cooling type, and cooing water circulated in a water jacket of the gas engine 10 is supplied through a first three-way valve 22, a reverse power flow heater 23 and a second three-way valve 24 to a radiator 25. The radiator 25 is juxtaposed with the outdoor heat exchanger 17, and they are cooled by air blown from the same air blower 26. The cooling water passed through the radiator 25 successively flows through a cooling water pump 27 and an exhaust gas heat exchanger 29 in this order, and returns to the water jacket of the gas engine 10.

Exhaust gas of the gas engine 10 is passed through the exhaust gas heat exchanger 29, and the exhaust gas concerned is passed through an exhaust top 30 and then discharged to the outside of the outdoor unit 2.

The first three-way valve 22 described above is automatically switched on the basis of the cooling water temperature. That is, when the cooling water temperature is lower than a predetermined temperature, the cooling water from the water jacket of the gas engine 10 is made to bypass the radiator 25, and it is directly passed through the cooling water pump 27 and the exhaust gas heat exchanger 29 in this order and returned to the water jacket.

The second three-way valve 24 is switched under heating operation, for example. In this case, the cooling water is made to bypass the radiator 25, and it is passed through the plate type heat exchanger 31, the cooling water pump 27 and the exhaust gas heat exchanger 29 and returned to the water jacket.

Next, the electric power generating system based on the electric power generator 11 will be described.

A system interconnection inverter 33 is connected to the electric power generator 11, and the system interconnection inverter 33 converts three-phase alternating power from the electric power generator 11 to DC power through an AC/DC converter, further converts the DC power to three-phase alternating power of 200V and then outputs the three-phase alternating power concerned to a commercial system 35. The commercial system 35 contains a commercial power source 36, a breaker 37 and a customer load 38, and the system interconnection inverter 33 is connected between the breaker 37 and the customer load 38.

The system interconnection inverter 33 supplies proper power to the reverse power flow heater 23, and also it is connected to an outdoor side controller 39 of the outdoor unit 2 through a communication line 40 so that the system connection inverter 33 can communicate with the controller 39. The outdoor side controller 39 achieves operating power from the commercial system 35 through a power supply line 41, and also it is connected to the indoor side controller of each indoor unit 3 through a communication line 42 so that the outdoor side controller 39 can communicate with each indoor side controller.

A power detector 43 disposed between the commercial power source 36 and the breaker 37 is connected to the system interconnection inverter 33. The power detector 43 achieves a power value supplied to the commercial system 35 on a real-time basis. The achieved power value data are input to the system interconnection inverter 33, and then transmitted through the communication line 40 to the outdoor side controller 39.

Furthermore, the system interconnection inverter 33 has a function of controlling the electricity (the amount of electric power) to be generated by the electric power generator 11, and reduces or increases the amount of electric power as occasion demands.

In this embodiment, the load of the gas engine 10 is increased when an air-conditioning demand at the indoor unit 3 side is increased and thus the load of the compressor 12 is increased, when the electric power demand is increased in accordance with the increase of the customer load 38 of the commercial system 35, when the load of the compressor d12 and the electric power demand to the electric power generator 11 are increased, or the like.

Here, the customer load 38 is monitored at all times by the power detector 43, the system interconnection inverter 33 and the outdoor side controller 39.

In this embodiment, a demand controller 51 for outputting an instruction of increasing the output of power generation (power reducing instruction) corresponding to contract demand of the commercial system is disposed.

The demand controller 51 outputs generated power output increasing instructions (power reducing instructions) of four states from level 0 to level 3, for example. If the output is equal to the level 0, the consumed power amount has a remarkably wide margin to the contract demand. The risk degree gradually increases to the level 3. The level 3 indicates that the consumed power amount approaches to the contract demand. The demand controller 51 outputs the power reducing instruction to the outdoor side controller 398, and the outdoor side controller 39 permits the system interconnection inverter 33 to increase the output of the power generation in accordance with the level of the power reducing instruction.

In this embodiment, the following first and second control modes are provided as a driving mode for the gas engine 10. In the first control mode, both the compressor 12 and the electric power generator 11 are driven by the gas engine 10 so that the air-conditioning/electric power generating system 11 is made to function as a cogeneration system having a so-called gas heat pump (GHP) type air conditioner. In the second control mode, only the electric power generator 11 out of the compressor 12 and the electric power generator 11 is driven by the gas engine 10 so that the air-conditioning/electric power generating system 11 is made to function as a mere cogeneration system.

In this case, under the first control mode in which the air-conditioning/electric generating system 1 is made to function as a cogeneration system having a so-called gas heat pump (GHP) type air conditioner, it is necessary to control the air-conditioning/electric power generating system 1 so that that an NOx 12 mode value defined in JIS B862 is less than the predeterminedNOx exhaust concentration corresponding to the generated power (output) of the electrical power generator 11.

Here, the NOx 12 mode value will be described.

The NOx 12 mode value means an average annual concentration of NOx in combustion gas exhausted by a machine under test (gas heat pump under test) when the machine carries out a standard operation, and it is calculated by an annual operating simulation using the result of the capacity test of the machine under test and the results of NOx concentration measuring test of totally 12 points, 6 points of cooling operation and 6 points of heating operation. The operating simulation is a calculation of determining the operation state (engine rotational number, cooling capacity, heating capacity, gas consumption amount, NOx concentration, etc.) of the machine under test at some outside temperature from a test result based on a fixed test condition on the basis of a fixed assumption.

Under the second control mode in which the air-conditioning/electric power generating system 1 is made to function as a mere cogeneration system, it is necessary to control the air-conditioning/electric power generating system 1 so that the maximum value of the NOx exhaust concentration is not more than a predetermined NOx maximum exhaust concentration.

Here, the NOx exhaust concentration will be described.

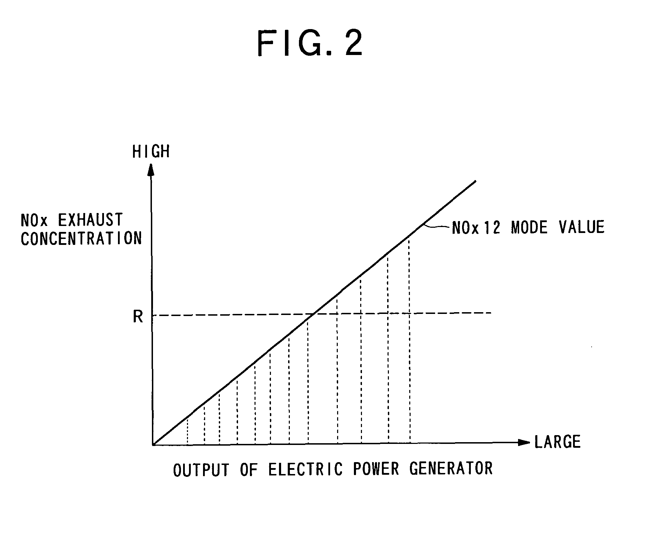

Fig. 2 shows the relationship between the NOx exhaust concentration and the output of the electric power generator.

In the second control mode in which the air-conditioning/electric power generating system 1 is made to function as a mere cogeneration system, it is necessary that the maximum value of the NOx exhaust concentration is not more than the predetermined NOx maximum exhaust concentration (indicated by a cogeneration reference value R in Fig. 2) irrespective of the output of the electric power generator 11 as shown in Fig. 2.

On the other hand, in the first control mode in which the air-conditioning/electric power generating system 1 is made to function as a cogeneration system having a so-called gas heat pump (GHP) type air conditioner, it is necessary that the maximum value of the NOx exhaust concentration is not more than the predetermined NOx maximum exhaust concentration corresponding to the output of the electric power generator 11 (= NOx 12 mode value) on the basis of the operating simulation as shown in Fig. 2.

As shown in Fig. 2, in a case where the output of the electric power generator 11 increases, even if the NOx exhaust concentration increases to a higher value in the first control mode than that in the second control mode at the same output of the electric power generator 11, such a higher NOx exhaust concentration is permitted in the first control mode. It is also unnecessary in the first control mode that the NOx exhaust concentration is controlled to be perfectly proportional to the output of the electric power generator 11, and if the output of the electric power generator 11 is less than a predetermined output, it is unnecessary to control the NOx exhaust concentration.

Next, the control of NOx exhaust concentration will be described.

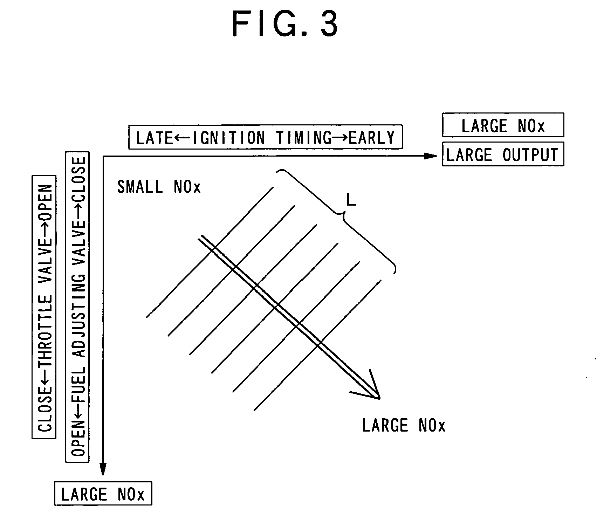

Fig. 3 is a diagram showing the control of the NOx exhaust concentration.

In order to control the NOx exhaust concentration, it is necessary to adjust the ignition timing of the gas engine 10, the opening degree of the fuel adjusting valve 7 and the opening degree of the throttle valve 8.

That is, when the ignition timing is delayed under the condition that the engine rotational number is fixed, as shown in Fig. 3, the output of the electric power generator 11 decreases, however, the NOx exhaust concentration is lowered. When the ignition timing is advanced under the condition that the engine rotational number is fixed, as shown in Fig. 3, the output of the electric power generator 11 increases, however, the NOx exhaust concentration is increased.

Furthermore, when the opening degree of the fuel adjusting valve 7 is adjusted to increase the fuel supply amount under the same air amount (the same opening degree of the throttle valve 8), the NOx exhaust concentration increases. When the fuel supply amount is reduced, the NOx exhaust concentration is lowered.

Furthermore, when the opening degree of the throttle valve 8 is adjusted to increase the air supply amount under the same fuel amount (the same opening degree of the fuel adjusting valve 7), the NOx exhaust concentration is lowered. When the air supply amount is reduced, the NOx exhaust concentration increases.

As a result, when isoconcentration lines L of the NOx exhaust concentration are drawn, they are shown as being hatched in Fig. 3. Accordingly, the outdoor side controller 39 adjusts the ignition timing in accordance with the output of the power electric generator 11 which is required on the basis of the output of the demand controller 51, etc., and also controls the opening degrees of the fuel adjusting valve 7 and the throttle valve 8 so that the NOx exhaust concentration is controlled to a fixed value or an NOx 12 mode value in accordance with the driving mode.

Next, the operation mode switching control will be described.

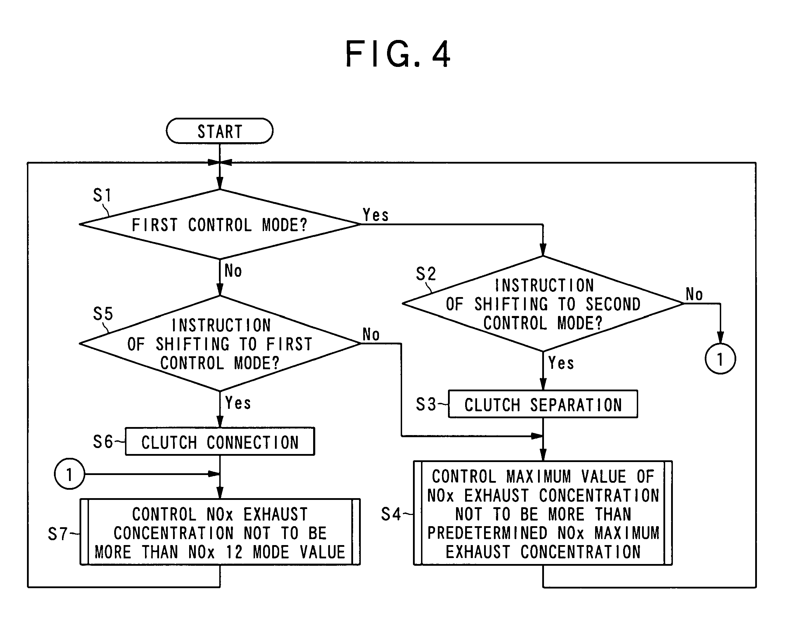

Fig. 4 is a flowchart showing the operation mode switching control.

First, the outdoor side controller 39 judges whether the present operation mode is the first control mode in which the air-conditioning/electric power generating system 1 is made to function as a cogeneration system having a so-called gas heat pump (GHP) type air conditioner (step S1).

If it is judged in step S1 that the present operation mode is the first control mode (step S1; Yes), the outdoor side controller 39 judges whether there is output an instruction of shifting the control mode of the air-conditioning/electric power generating system 1 to the second control mode in which the air-conditioning/electric power generating system 1 is made to function as a mere cogeneration system (step S2).

If it is judged in step S2 that there is output an instruction of shifting to the second control mode (step S2; Yes), the outdoor side controller 39 separates the magnetic clutch 14 from the compressor 12 (step S3), and adjusts the ignition timing of the gas engine 10, the opening degree of the fuel adjusting valve 7 and the opening degree of the throttle valve 8 so that the maximum value of the NOx exhaust concentration is not more than a predetermined NOx maximum exhaust concentration (step S4), and shifts the processing to the step S1 again.

If it is judged in step S1 that the present operation mode is not the first control mode, that is, the present operation mode is the second control mode (step S1; No), the outdoor side controller 39 judges whether there is output an instruction of shifting the operation mode of the air-conditioning/electric power generating system 1 to the first control mode in which the air-conditioning/electric power generating system 1 is made to function as a cogeneration system having a gas heat pump (GHP) type air conditioner (step S5).

If it is judged in step S5 that the there is output an instruction of shifting the operation mode of the air-conditioning/electric power generating system 1 to the first control mode (step S5; Yes), the outdoor side controller 39 connects the magnetic clutch 14 to the compressor 12 (step S6), and adjusts the ignition timing of the gas engine 10, the opening degree of the fuel adjusting valve 7 and the opening degree of the throttle valve 8 so that the NOx 12 mode value is not more than a predetermined value with respect to an air conditioning load (= the load of the compressor, and further the load of the electric power generator 11) on the basis of the operating simulation (step S7), and shifts the processing to the step S1 again.

As described above, according to this embodiment, the gas engine 10 which has been hitherto used only under air-conditioning operation is also driven under non-air-conditioning operation, whereby the air-conditioning/electric power generating system 1 can be made to function as a gas engine cogeneration system. Accordingly, the air-conditioning/electric power generating system can be used throughout the year, and the use efficiency of the system can be enhanced. In addition, the added value of the system (equipment) can be enhanced.

Furthermore, even under air-conditioning operation, at least a part of waste heat is withdrawn through a hot water system by using a waste heat withdrawing system of the gas engine 10, whereby hot water can be supplied all year.

Still furthermore, the air-conditioning/electric power generating system 1 is made to function as a cogeneration system having a gas heat pump (GHP) type air conditioner to use extra power of the electric power generator 11, or the air-conditioning/electric power generating system 1 is made to function as a mere cogeneration system to fully exercise the electric power generation capacity of the electric power generator, thereby using the generated output power. In addition, the NOx exhaust concentration required to each cogeneration system can be controlled.

In the foregoing description, the NOx exhaust concentration is controlled. However, the apparatus may be designed so that the NOx exhaust amount can be controlled.

The system interconnection inverter 33 is disposed separately from the outdoor unit 2. However, the system interconnection inverter 33 may be integrally mounted in the outdoor unit 2. In this case, when a plurality of outdoor units 2 are disposed, the system interconnection inverter 33 is disposed in each outdoor unit 2, these system interconnection inverters 33 are connected to one another by a conversion device, and the conversion device concerned outputs an output control instruction to each system interconnection inverter 33.

Furthermore, in this embodiment, the power supplied from the inverter is set to three-phase 200V. However, the power may be set to three-phase 100V or a single-phase three-wire system.

## Claims

1. An air-conditioning and electric power generating system, **characterized by** comprising:
an air conditioner having a gas engine, an outdoor heat exchanger, a pressure-reducing device, an indoor heat exchanger and a compressor connected to the gas engine through a clutch;
an electric power generator that is driven by the gas engine and has electric power generating capacity corresponding to the driving power of the gas engine when the compressor is separated from the gas engine by the clutch;
a system interconnection type inverter that is connected to the electric power generator and outputs power to a commercial system;
a waste heat using portion for using waste heat of the gas engine; and
an engine controller that has a first control mode and a second control mode as a driving mode to control the driving of the gas engine, and controls the gas engine to serve as a gas engine for driving both the compressor and the electric power generator in the first control mode while controlling the gas engine to serve as a gas engine for driving only the electric power generator in the second control mode.

2. The air-conditioning/electric power generating system according to claim 1, wherein the engine controller controls any one of the NOx exhaust concentration and NOx exhaust gas amount in the exhaust gas of the gas engine in accordance with each control mode.

3. The air-conditioning/electric power generating system according to claim 2, wherein the engine controller controls the gas engine in the first control mode so that an NOx 12 mode value defined in JIS B8627 corresponding to an air-conditioning load is less than the NOx exhaust concentration.

4. The air-conditioning/electric power generating system according to claim 2, wherein the engine controller controls the gas engine in the second control mode so that the maximum value of the NOx exhaust concentration is not more than a predetermined NOx maximum exhaust concentration as a gas engine co-generation system.

5. A method of controlling an air-conditioning and electrical power generating system including: an air conditioner having a gas engine, an outdoor heat exchanger, a pressure-reducing device, an indoor heat exchanger and a compressor connected to the gas engine through a clutch; an electric power generator that is driven by the gas engine and has electric power generating capacity corresponding to the driving power of the gas engine when the compressor is separated from the gas engine by the clutch; a system interconnection type inverter that is connected to the electric power generator and outputs power to a commercial system; and a waste heat using portion for using waste heat of the gas engine, comprising:
a driving mode identifying step of identifying a present driving mode; and
an NOx exhaust concentration control step of controlling the gas engine so that an NOx 12 mode value defined in JIS B8627 corresponding to an air-conditioning load is less than a predetermined NOx exhaust concentration when the present driving mode is a fist control mode for controlling the gas engine to serve as a gas engine for driving both the compressor and the electric power generator, and controlling the gas engine so that the maximum value of the NOx exhaust concentration is not more than a predetermined NOx maximum exhaust concentration as a gas engine co-generation system when the present driving mode is a second control mode for controlling the gas engine to serve as a gas engine for driving only the electric power generator.
